# FASCICULE DE BREVET EUROPEEN

(11) **EP 2 689 559 B1**
(45) Date de publication et mention de la délivrance du brevet: **21.06.2017**
(21) Numéro de dépôt: 12705827.9
(22) Date de dépôt: 15.02.2012
(51) Int. Cl.: H04L 12/24, H04L 12/28

(54) **PROCÉDÉ ET DISPOSITIF DE CONFIGURATION SUR LA BASE DE RÈGLES DE GESTION**
KONFIGURATIONVERFAHREN UND VORRICHTUNG BASIEREND AUF MANAGEMENTREGELN
CONFIGURATION METHOD AND DEVICE BASED ON MANAGEMNT'S RULES

(30) Priorité: 22.03.2011 FR 1152337
(43) Date de publication de la demande: 29.01.2014
(73) Titulaire: SAGEMCOM BROADBAND SAS, 92500 Rueil Malmaison (FR)
(72) Inventeur: MASERA, Eric, F-92500 Rueil Malmaison (FR)
(74) Mandataire: Le Guen-Maillet
(86) Numéro de dépôt international: PCT/EP2012/052600
(87) Numéro de publication internationale: WO 2012/126679

(56) Documents cités:
- EP-A1- 2 073 447
- US-A1- 2003 217 136
- US-A1- 2010 256 781

## Description

La présente invention concerne la configuration pour la gestion, c'est-à-dire la surveillance et le contrôle, d'appareils d'un système sur la base de règles de gestion définissant au moins une action à exécuter par ledit système lorsqu'au moins une condition est remplie.

Les appareils électroniques grand public disposant d'une interface réseau et les appareils domotiques contrôlables à distance se multiplient. Cela permet de proposer de nouveaux services aux utilisateurs, notamment au sein d'une habitation ou de locaux professionnels. Un système de gestion, c'est-à-dire de surveillance et de contrôle, peut alors être mis en place de manière à gérer ses nouveaux services.

Un tel système de gestion est capable de détecter des appareils présents dans son environnement et d'en récupérer un descriptif. Il est par exemple possible d'utiliser la norme UPnP (*Universal Plug and Play* en anglais) telle que définie dans le document ISO/IEC 29341-1:2008. De cette norme, il est notamment possible d'utiliser le protocole SSDP (*Simple Service Discovery Protocol* en anglais) pour découvrir des appareils présents dans l'environnement du système de gestion. Ainsi, selon le protocole UPnP, un appareil signale sa présence par le biais d'un message de type SDDP NOTIFY. Le point de contrôle du système transmet alors une requête de type HTTP GET et obtient en réponse, au format XML (*eXtended Markup Language* en anglais), un descriptif des états dans lesquels l'appareil a la possibilité de se trouver et des fonctions qu'il a la possibilité d'exécuter.

Un résultat similaire peut être obtenu avec d'autres technologies de communication et selon d'autres protocoles de découvertes et commandes, comme par exemple la technologie ZigBee (marque déposée), basée sur les spécifications IEEE 802.15.4 de contrôle d'accès à un support sans-fil (*Wireless Medium Access Control* en anglais) et de couche physique (*physical layer* en anglais) pour des réseaux sans-fil bas débit à dimension personnelle (LR-WPAN ou *Low Rate Wireless Personal Area Networks* en anglais).

Le système de gestion peut être configuré à l'aide de règles de gestion (*business rules* en anglais), aussi appelées règles métier. Ces règles de gestion sont définies par au moins une condition et au moins une action. Ainsi, lorsque la condition de la règle de gestion est remplie, le système met en oeuvre l'action associée, par le biais d'un moteur de règles (*business rules engine* en anglais). Le but d'un tel moteur de règles est de séparer la logique métier, c'est-à-dire les scénarii à mettre en oeuvre, de la logique système. Ainsi, la logique métier peut évoluer et être maintenue séparément de la programmation applicative elle-même.

Ainsi, grâce à la définition de règles de gestion et à l'utilisation du moteur de règles, un utilisateur a la possibilité de personnaliser le comportement de son système de gestion des appareils dont il dispose, par exemple en ce qui concerne la domotique ou les services multimédia.

Cependant, la définition de ces règles de gestion nécessite des compétences techniques de manière à interpréter les événements et messages générés au sein du système de gestion et à programmer le moteur de règles de manière adéquate. Il est alors délicat, voire impossible sans assistance à un utilisateur sans ces compétences techniques, de définir de nouvelles règles de gestion et ainsi personnaliser son environnement à sa guise. Les systèmes de gestion de l'état de la technique manquent ainsi de flexibilité, à cause de cette limitation liée aux compétences techniques requises pour la programmation des moteurs de règles et l'interprétation des événements et messages générés.

Il est souhaitable de pallier ces différents inconvénients de l'état de la technique.

Il est notamment souhaitable de fournir une solution qui permette une configuration pour la gestion d'appareils d'un système sur la base de règles de gestion, de manière simple ne requérant pas de compétences liées à la programmation de moteurs de règles et à l'interprétation d'événements ou messages générés dans le système.

L'invention concerne un procédé de configuration pour la gestion d'appareils d'un système sur la base de règles de gestion définissant au moins une action à exécuter par ledit système lorsqu'au moins une condition est remplie, ledit système comportant un moteur de règles destiné à mettre en oeuvre lesdites règles de gestion. Le procédé est tel qu'un dispositif de configuration obtient une description d'états dans lesquels chaque appareil du système a la possibilité de se trouver, et obtient une description de fonctions que chaque appareil du système a la possibilité d'exécuter. Le procédé est en outre tel que le dispositif de configuration : transcrit lesdites descriptions des états et fonctions en expressions sémantiques respectives ; fournit lesdites expressions sémantiques des états et des fonctions à une interface utilisateur ; permet à un utilisateur, via l'interface utilisateur, de définir au moins une règle de gestion à partir d'au moins une condition, sur la base des expressions sémantiques d'états, et d'au moins une action, sur la base des expressions sémantiques de fonctions ; et, transcrit chaque règle de gestion, définie sémantiquement via l'interface utilisateur, en instructions interprétables par le moteur de règles.

Ainsi, grâce à la transcription sémantique des états et des actions, l'utilisateur peut définir des règles de gestion, de manière simple ne requérant pas de compétences liées à la programmation de moteurs de règles, ni à l'interprétation d'événements ou messages générés dans le système. En effet, cette approche sémantique via l'interface utilisateur permet à l'utilisateur d'utiliser un langage naturel pour comprendre les états et fonctions possibles dans le système et lui permet de définir tout aussi naturellement les règles de gestion à appliquer par le système.

Selon un mode de réalisation particulier, lorsqu'un état ou une fonction est associé à au moins un attribut pouvant prendre différentes valeurs, le dispositif de configuration transcrit la description de l'état ou de la fonction en expressions sémantiques en fonction desdites différentes valeurs.

Ainsi, le caractère technique de la programmation du moteur de règles est encore plus masqué.

Selon un mode de réalisation particulier, le dispositif de configuration transcrit lesdites descriptions des états et fonctions en expressions sémantiques dans une langue prédéterminée parmi un choix de plusieurs langues disponibles via l'interface utilisateur.

Ainsi, la définition des règles de gestion est d'autant plus naturelle pour l'utilisateur.

Selon un mode de réalisation particulier, le dispositif de configuration transcrit lesdites descriptions des états et fonctions en expressions sémantiques par utilisation d'au moins un dictionnaire de correspondance entre, pour chaque appareil en fonction de son type, chaque état ou fonction et une expression sémantique correspondante.

Ainsi, la transcription en expressions sémantiques est mise en oeuvre de manière simple et rapide.

Selon un mode de réalisation particulier, le dispositif de configuration permet à l'utilisateur, via l'interface utilisateur, de définir au moins une condition de règle de gestion sur la base d'un événement d'horodatage ou d'activation d'un profil utilisateur auprès dudit système.

Ainsi, un plus grand panel de conditions est offert à l'utilisateur.

Selon un mode de réalisation particulier, le dispositif de configuration permet la diffusion via l'interface utilisateur d'une règle de gestion en cours de définition, et le dispositif de configuration permet la diffusion via l'interface utilisateur, pour chaque appareil concerné par une condition ou action définie, d'une expression sémantique correspondant à un nom dudit appareil associée à une expression sémantique correspondant à un verbe représentatif de l'état ou de la fonction concerné par respectivement ladite condition ou action définie.

Ainsi, par la diffusion, comme par exemple l'affichage, de portions de phrase grâce aux noms d'appareils et aux verbes représentant leurs états et fonctions, la définition des règles de gestion est d'autant plus naturelle pour l'utilisateur.

Selon un mode de réalisation particulier, le dispositif de configuration permet l'insertion automatique, pour l'affichage de la règle de gestion en cours de définition, d'expressions sémantiques de liaison sur la base de chaque condition ou action définie.

Ainsi, par l'introduction de ces expressions sémantiques de liaison, la diffusion de la règle de gestion en cours de définition se fait sous forme de phrase, et la définition des règles de gestion est d'autant plus naturelle pour l'utilisateur.

Selon un mode de réalisation particulier, le dispositif de configuration permet, via l'interface utilisateur, une sélection de plusieurs appareils, et permet d'associer une condition ou action à cette sélection d'appareils.

Ainsi, la définition de certaines règles de gestion peut être accélérée et facilitée.

Selon un mode de réalisation particulier, l'interface utilisateur étant une interface graphique, le dispositif de configuration permet, via l'interface graphique, l'affichage de représentations desdits appareils par groupes établis selon une répartition géographique desdits appareils et/ou selon des services fournis par lesdits appareils.

Ainsi, la définition des règles de gestion est facilitée.

Selon un mode de réalisation particulier, le dispositif de configuration reçoit des descriptifs d'états et de fonctions des appareils selon différents protocoles utilisant différents formats, et transcrit dans un même format les descriptifs reçus pour obtenir lesdites descriptions des états et fonctions.

Ainsi, il est possible de faire converger la gestion de différents types d'appareils dans un même système, et ce de manière transparente pour l'utilisateur définissant les règles de gestion.

L'invention concerne également un dispositif de configuration pour la gestion d'appareils d'un système sur la base de règles de gestion définissant au moins une action à exécuter par ledit système lorsqu'au moins une condition est remplie, ledit système comportant un moteur de règles destiné à mettre en oeuvre chacune desdites règles de gestion. Le dispositif de configuration est tel qu'il comporte : des moyens pour obtenir une description d'états dans lesquels chaque appareil du système a la possibilité de se trouver, et des moyens pour obtenir une description de fonctions que chaque appareil du système a la possibilité d'exécuter. Le dispositif de configuration est en outre tel qu'il comporte : des moyens pour transcrire lesdites descriptions des états et fonctions en expressions sémantiques respectives ; des moyens pour fournir lesdites expressions sémantiques des états et des actions à une interface utilisateur ; des moyens pour permettre à un utilisateur, via l'interface utilisateur, de définir au moins une règle de gestion à partir d'au moins une condition, sur la base des expressions sémantiques d'états, et d'au moins une action, sur la base des expressions sémantiques de fonctions ; et, des moyens pour transcrire chaque règle de gestion, définie sémantiquement via l'interface utilisateur, en instructions interprétables par le moteur de règles.

L'invention concerne également une interface graphique de définition de règles de gestion pour la gestion d'appareils d'un système, chaque règle de gestion définissant au moins une action à exécuter par ledit système lorsqu'au moins une condition est remplie. L'interface graphique est telle qu'elle comporte : une première zone d'affichage destinée à afficher des représentations desdits appareils et à permettre à un utilisateur de sélectionner au moins un desdits appareils ; une seconde zone d'affichage destinée à afficher des expressions sémantiques représentatives d'états respectifs dans lesquels au moins un appareil sélectionné a la possibilité de se trouver et à permettre à un utilisateur de sélectionner ; une troisième zone d'affichage destinée à afficher des expressions sémantiques représentatives de fonctions qu'au moins un appareil sélectionné a la possibilité d'exécuter ; et une quatrième zone d'affichage destinée à afficher une règle de gestion en cours de définition. L'interface graphique est en outre telle que lesdites seconde et troisième zones d'affichage sont adaptées pour permettre à un utilisateur de définir au moins une règle de gestion à partir d'au moins une condition, sur la base des expressions sémantiques d'états affichées dans la première zone d'affichage, et d'au moins une action, sur la base des expressions sémantiques de fonctions affichées dans la seconde zone d'affichage.

L'invention concerne également un programme d'ordinateur destiné à être lu par un système informatique ou un processeur. Ce programme d'ordinateur comprend des instructions pour implémenter le procédé mentionné ci-dessus dans n'importe laquelle de ces variantes de mise en oeuvre, lorsque ledit programme est exécuté par un système informatique ou un processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de gestion d'appareils dans lequel l'invention peut être mise en oeuvre ;
- la Fig. 2 illustre schématiquement une architecture pour un dispositif de configuration du système de gestion ;
- la Fig. 3 illustre schématiquement une architecture pour une unité de contrôle du système de gestion comportant le dispositif de configuration ;
- la Fig. 4 illustre schématiquement un algorithme mis en oeuvre par le dispositif de configuration, lors de la détection d'un changement de topologie du système de gestion ;
- la Fig. 5 illustre schématiquement un algorithme mis en oeuvre par le dispositif de configuration, lors de la définition d'une règle de gestion à appliquer par le système de gestion ;
- la Fig. 6 illustre schématiquement un algorithme mis en oeuvre par le système de gestion de la Fig. 1 pour appliquer une règle de gestion ;
- la Fig. 7 illustre schématiquement une interface graphique permettant à un utilisateur de définir une règle de gestion à appliquer par le système de gestion.

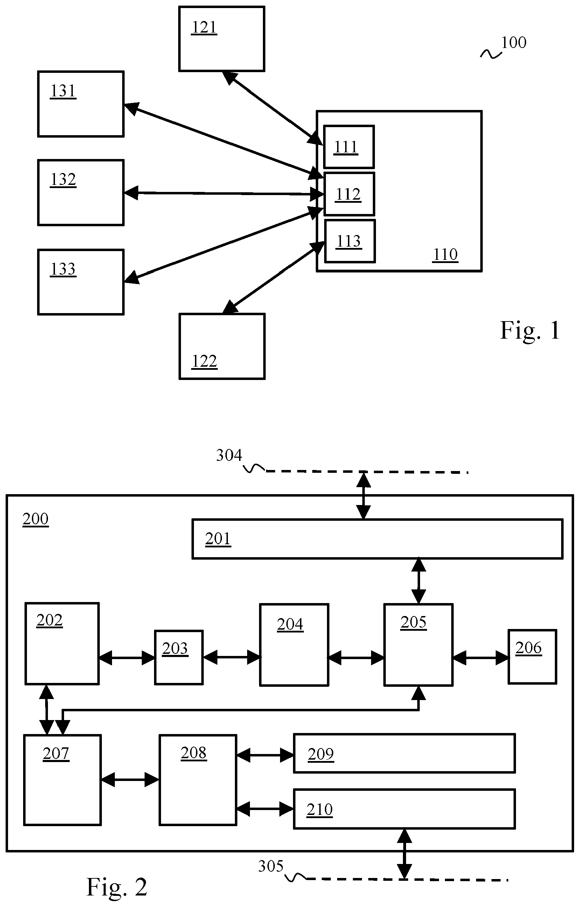

La Fig. 1 illustre schématiquement un système 100 de gestion d'appareils dans lequel l'invention peut être mise en oeuvre.

Le système 100 permet la gestion d'appareils dans un environnement donné. Par exemple, cet exemple est le milieu domestique de particuliers, mais peut aussi être tout autre type d'environnement, tel qu'un milieu professionnel.

Selon un premier exemple, le système 100 gère des appareils adaptés pour la domotique, tels que des lampes, des volets ou des appareils de chauffage, etc. qu'une unité de contrôle 110 du système 100 peut contrôler et surveiller à distance. Selon un second exemple, le système 100 gère des appareils fournissant des services multimédia, tels qu'un enregistreur numérique, un boîtier décodeur (*set-top box* en anglais), des caméras vidéo, etc. qui peuvent eux-aussi être contrôlés et surveillés à distance par l'unité de contrôle 110.

Ainsi, le système 100 permet la gestion d'appareils qui peuvent se trouver dans différents états, et ce suivant si les fonctions qu'ils proposent sont effectivement activées ou pas. En reprenant l'exemple de la domotique, un appareil de type lampe peut être dans un état « allumé » (*on* en anglais) ou « éteint » (*off* en anglais) et fournit les fonctions d'activation et de désactivation d'éclairage. Certains appareils, de par le grand nombre de fonctions qu'ils proposent, ont la possibilité de se trouver dans un nombre d'états bien plus élevé.

L'unité de contrôle 110 comporte une pluralité d'interfaces 111, 112, 113, reposant sur des technologies de communication, qu'elles soient sans-fil ou câblées. Les interfaces 111, 112, 113 permettent à l'unité de contrôle 110 de communiquer avec des appareils selon différents protocoles et/ou via différents supports de communication. L'unité de contrôle 110 est ainsi connectée à un appareil 121 via l'interface 111, à des appareils 131, 132, 133 via l'interface 112 et à un appareil 122 via l'interface 113.

Comme détaillé par la suite, l'unité de contrôle 110 permet de faire appliquer dans le système 100 des règles de gestion définies par l'utilisateur.

La Fig. 2 illustre schématiquement une architecture pour un dispositif de configuration 200 du système de gestion 100.

Le dispositif de configuration 200 permet à un utilisateur de définir des règles de gestion à faire appliquer par l'unité de contrôle 110. Le dispositif de configuration 200 peut être inclus dans l'unité de contrôle 110 ou en être distinct. Le premier cas est celui présenté à la Fig. 2. Dans le second cas, l'unité de contrôle 110 comporte une mémoire pour stocker les règles fournies par le dispositif de configuration 200 et un moteur de règles pour les faire appliquer. Il est à noter que, dans ce second cas, il n'est pas nécessaire que le dispositif de configuration 200 comporte un moteur de règles, étant donné que le dispositif de configuration 200 est uniquement utilisé dans le but de définir des règles de gestion et pas dans le but de les faire appliquer.

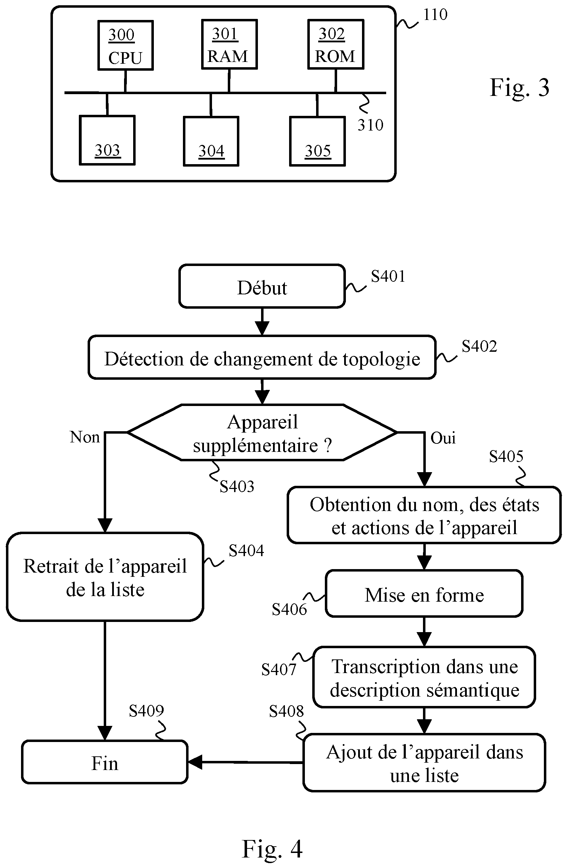

Le dispositif de configuration 200 comporte un module de mise en forme 210 destiné à mettre en forme des données reçues sous forme de messages selon différents protocoles via un groupement d'interfaces 305. Le groupement d'interfaces 305 est représenté à la Fig. 3 et correspond à l'ensemble des interfaces 111, 112, 113 de l'unité de contrôle 110. En effet, pour permettre à l'utilisateur de définir des règles de gestion, le dispositif de configuration 200 reçoit, en provenance des appareils du système 100, des descriptifs d'états dans lesquels ces appareils ont la possibilité de se trouver, ainsi que des descriptifs de fonctions que ces appareils ont la possibilité d'exécuter. Etant donné que le dispositif de configuration 200 peut recevoir ces descriptifs selon différents protocoles utilisant différents formats, le module de mise en forme 210 transcrit dans un même format les descriptifs reçus. Cela permet au dispositif de configuration 200 d'obtenir des descriptions d'états et de fonctions dans un unique format, indépendant des technologies de communication et des protocoles mis en oeuvre. Le module de mise en forme 210 permet alors de simplifier la transcription ultérieure de ces descriptions d'états et de fonctions en expressions sémantiques. Il est à noter que le dispositif de configuration 200 peut ne pas comporter le module de mise en forme 210 lorsque les appareils utilisent un même protocole de communication.

Le module de mise en forme 210 reçoit en outre des notifications ou événements, en provenance des appareils du système 100, mettant en évidence des changements d'état de ces appareils.

Le dispositif de configuration 200 comporte un module de gestion 208 d'une liste de l'ensemble des appareils du système 100 et des services qu'ils proposent. Le dispositif de configuration 200 comporte en outre une liste 209 des appareils du système 100, des états dans lesquels ils ont la possibilité de se trouver et des fonctions qu'ils proposent. Le module de gestion 208 est en charge de la gestion de la liste 209, en fonction d'informations reçues du module de mise en forme 210. Le module de gestion 208 permet aussi d'invoquer des fonctions auprès des appareils du système 100.

Le dispositif de configuration 200 comporte en outre un module gestionnaire 207 des états effectifs des appareils du système 100 et de suivi de ces états. Le module gestionnaire 207 obtient ainsi une représentation du contexte effectif du système 100. Cette représentation de contexte est maintenue par le module gestionnaire 207 en fonction des informations fournies par le module de gestion 208, et éventuellement par un moteur de règles 202 du dispositif de configuration 200.

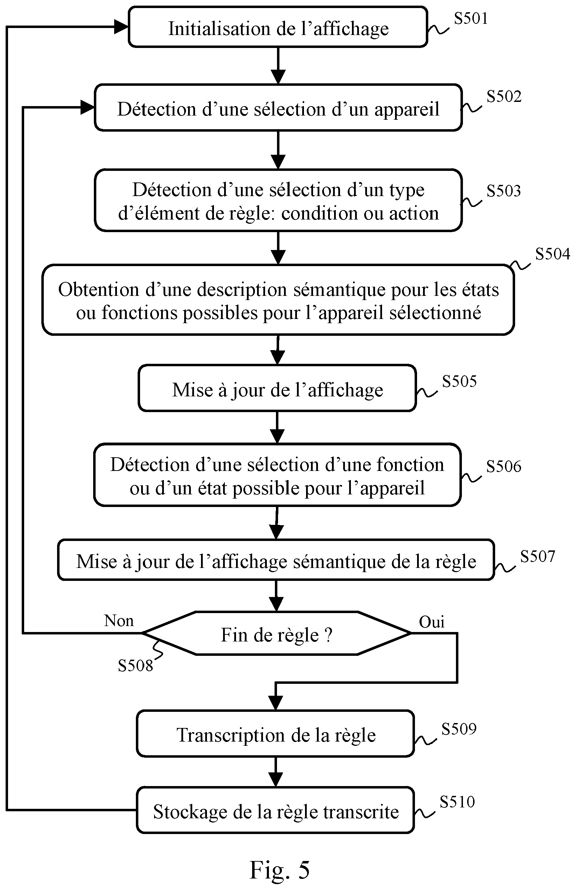

Le moteur de règles 202 est en charge de faire appliquer les règles de gestion, telles qu'elles peuvent être obtenues par exécution de l'algorithme décrit ci-après en relation avec la Fig. 5. Le moteur de règles 202 reçoit du module gestionnaire 207 des informations quant à la survenue d'événements qui entraînent des changements d'état des appareils du système 100. Lorsqu'une condition de règle de gestion est remplie suite à un tel changement d'état, le moteur de règles 202 requiert alors au module de gestion 208 de faire appliquer chaque action définie par cette règle de gestion, en invoquant les fonctions adéquates des appareils concernés.

Le moteur de règles 202 est par exemple de type *JRuleEngine,* conformément au document « JSR-94 : Java Specification Request 94, version 1.1 ».

Le dispositif de configuration 200 comporte en outre une base de règles 203. Une fois qu'une règle de gestion est définie, elle est stockée sous forme sémantique pour affichage ultérieur. Ce stockage peut se faire dans une unité de stockage dédiée (non représentée sur la Fig. 2), ou dans la liste 209 alors étendue pour permettre de stocker des règles de gestion sous forme sémantique. Le dispositif de configuration 200 stocke en outre la règle de gestion dans la base de règles 203, après transcription. Cette base de règles 203 est alors utilisée par le moteur de règles 202 pour déterminer, lorsqu'un changement d'état survient dans le système 100, si une condition de règle de gestion est remplie.

Le dispositif de configuration 200 comporte en outre un transcripteur de règles 204. Une fois qu'une règle de gestion est définie, comme décrit ci-après en relation avec la Fig. 5, le transcripteur de règles 204 transcrit la règle de gestion, qui est exprimée sous forme sémantique, en instructions interprétables par le moteur de règles 202. Cette transcription peut être faite en utilisant une table de correspondance LUT (*Look-Up Table* en anglais). Le transcripteur de règles 204 stocke ensuite la règle de gestion transcrite dans la base de règles 203.

Le dispositif de configuration 200 peut comporter en outre une base de données sémantiques 206, qui fait office de dictionnaire de correspondance entre, pour chaque appareil en fonction de son type, chaque état ou fonction et une expression sémantique correspondante. Le dispositif de configuration 200 peut alternativement, ou en complément de la base de données sémantiques 206, utiliser une base de données distante (non représentée) via un réseau de communication. Cela permet de faciliter la mise à jour du dictionnaire suite à l'apparition de nouveaux appareils sur le marché.

La base de données sémantiques 206 comporte préférentiellement des expressions sémantiques équivalentes dans plusieurs langues.

Le dispositif de configuration 200 comporte en outre un éditeur de règles 205. L'éditeur de règles obtient, par exemple via le module gestionnaire 207, une liste des appareils du système 100. Il obtient aussi, par exemple via le module gestionnaire 207, une description des états dans lesquels chaque appareil du système 100 a la possibilité de se trouver, ainsi qu'une description de chaque fonction que chaque appareil du système 100 a la possibilité d'exécuter. L'éditeur de règles 205 transcrit ensuite ces descriptions en expressions sémantiques, en utilisant la base de données sémantiques 206. Cela permet d'obtenir une description des états et fonctions en langage naturel pour l'utilisateur. De plus, lorsque la base de données sémantiques 206 comporte des expressions sémantiques équivalentes dans plusieurs langues, l'éditeur de règles 205 permet d'effectuer la transcription en fonction d'une langue choisie par l'utilisateur.

Dans un mode de réalisation particulier, lorsqu'un état ou une fonction est associé à au moins un attribut pouvant prendre différentes valeurs, le dispositif de configuration 200 transcrit la description de l'état ou de la fonction en expressions sémantiques en fonction de ces différentes valeurs. Par exemple, un appareil de type lampe peut être allumé selon plusieurs configurations : faible intensité, intensité moyenne ou forte intensité. Deux états peuvent alors être définis : « allumée » ou « éteinte », avec pour l'état « allumée » un attribut représentatif de l'intensité. De la même manière, cet appareil peut proposer deux fonctions « augmenter l'intensité » et « diminuer l'intensité », avec chacune un attribut représentatif de l'intensité à atteindre par application de la fonction.

Le dispositif de configuration 200 comporte en outre un module de gestion d'interface utilisateur 201. Le module de gestion 201 est en charge d'interfacer l'éditeur de règles 205 avec un module d'interface graphique 304. Le module de gestion 201 permet ainsi à l'éditeur de règles 205 de fournir les expressions sémantiques des états et des fonctions au module d'interface graphique 304. Le module de gestion 201 permet en outre à l'éditeur de règles 205 de fournir au module d'interface graphique 304 la liste des appareils du système 100. Le module de gestion 201 permet en outre à l'utilisateur, via le module d'interface graphique 304, de définir au moins une règle de gestion à partir d'au moins une condition, sur la base de ces expressions sémantiques d'états, et d'au moins une action, sur la base de ces expressions sémantiques de fonctions. Le module de gestion 201 fournit alors chaque condition et action définie à l'éditeur de règles 205.

Il est à noter que d'autres architectures peuvent permettre de réaliser le dispositif de configuration 200 ou l'unité de contrôle 110. Par exemple, il est possible de placer le module de mise en forme 210 et le groupement d'interfaces 305 sur une première plate-forme et les autres modules sur une seconde plate-forme. Chacune de ces plates-formes comporte alors un module d'interface avec l'autre plate-forme permettant d'échanger les données nécessaires à la gestion des appareils du système 100. L'interface entre les deux plates-formes peut alors être réalisée par l'utilisation de protocoles Web, comme par exemple HTTP (*HyperText Transfer Protocol* en anglais) ou SOAP (*Simple Object Access Protocol* en anglais).

Tout ou partie de l'architecture présentée à la Fig. 2 et des algorithmes décrits ci-après en relation avec les Figs. 4 à 6 peut être implémenté sous forme logicielle par exécution d'un ensemble d'instructions par une machine programmable, tel qu'un DSP (*Digital Signal Processor* en anglais ou *Unité de Traitement de Signal Numérique* en français), un microcontrôleur ou un processeur de type CPU (*Central Processing Unit* en anglais ou *Unité Centrale de Traitement* en français).

Alternativement, tout ou partie de l'architecture présentée à la Fig. 2 et des algorithmes décrits ci-après en relation avec les Figs. 4 à 6 peut être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

La Fig. 3 illustre schématiquement une architecture pour l'unité de contrôle 110 comportant le dispositif de configuration 200.

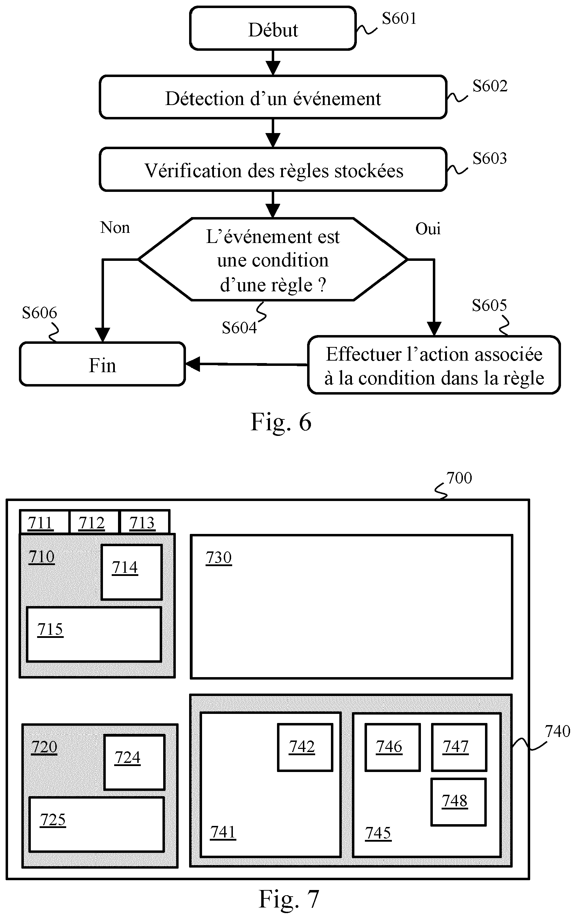

L'unité de contrôle 110 comporte, reliés par un bus de communication 310 :
- un processeur, micro-processeur, microcontrôleur ou CPU 300 ;
- une mémoire vive RAM (*Random Access Memory* en anglais ou *Mémoire à Accès Aléatoire* en français) 301 ;
- une mémoire morte ROM (*Read Only Memory* en anglais ou *Mémoire à Lecture Seule* en français) 302 ;
- un lecteur 303 de support de stockage, tel qu'un lecteur de carte SD (*Secure Digital Card* en anglais ou *Carte Numérique Sécurisée* en français) ;
- des moyens d'interface homme-machine, et plus particulièrement un module d'interface graphique 304 permettant de gérer l'affichage d'une interface graphique 700, dont un exemple est illustré ci-après en relation avec la Fig. 7 ;
- des moyens d'interface 305 de communication avec les appareils du système 100, comportant notamment les interfaces 111, 112, 113.

Le CPU 300 est capable d'exécuter des instructions chargées dans la RAM 301 à partir de la ROM 302, d'une mémoire externe (non représentée), d'un support de stockage, tel qu'une carte SD ou autre, ou d'un réseau de communication. Lorsque l'unité de contrôle 110 est mise sous tension, le CPU 300 est capable de lire de la RAM 301 des instructions et de les exécuter. Ces instructions forment un programme d'ordinateur qui cause la mise en oeuvre, par le CPU 300, de tout ou partie des algorithmes décrits ci-après en relation avec les Figs. 4 à 6.

La Fig. 4 illustre schématiquement un algorithme mis en oeuvre par le dispositif de configuration 200, lors de la détection d'un changement de topologie du système 100. Un tel changement de topologie survient lorsqu'un appareil est déconnecté du système 100, lorsqu'un appareil est connecté pour la première fois au système 100 ou lorsqu'un appareil est reconnecté au système 100.

L'algorithme démarre dans une étape S401. Dans une étape suivante S402, le dispositif de configuration 200 détecte un changement de topologie du système 100. Dans une étape suivante S403, le dispositif de configuration 200 vérifie si un appareil a été ajouté au système 100 par rapport au contexte précédant le changement de topologie. Si tel est le cas, une étape S405 est effectuée ; sinon, une étape S404 est effectuée.

Lors de l'étape S404, le dispositif de configuration 200 détermine quel appareil a été déconnecté du système 100 et le retire de la liste des appareils 209. Le module gestionnaire 207 met alors à jour les informations de contexte du système 100. Cette information peut être propagée à l'éditeur de règles 205 afin qu'il permette la mise à jour de l'interface utilisateur en conséquence. Il est ensuite mis fin à l'algorithme dans une étape S409.

Lors de l'étape S405, le dispositif de configuration 200 obtient le nom de l'appareil nouvellement connecté ou reconnecté au système 100. Il obtient aussi un descriptif des états dans lesquels cet appareil a la possibilité de se trouver et des fonctions qu'il a la possibilité d'exécuter. Par exemple, comme déjà mentionné, un protocole basé sur la norme UPnP peut être utilisé à cet effet.

Lors d'une étape suivante S406, le dispositif de configuration 200 effectue une mise en forme des descriptifs obtenus. Ainsi, lorsque le dispositif de configuration 200 est adapté pour recevoir des descriptifs d'états et de fonctions des appareils selon différents protocoles utilisant différents formats, le dispositif de configuration 200 transcrit dans un même format les descriptifs reçus. Il obtient ainsi des descriptions homogènes des états et fonctions.

Lors d'une étape suivante S407, le dispositif de configuration 200 transcrit les descriptions des états et fonctions en expressions sémantiques respectives, par le biais de l'éditeur de règles 205. L'éditeur de règles 205 permet ainsi la mise à jour de l'interface utilisateur en conséquence.

Lors d'une étape suivante S408, le dispositif de configuration 200 met à jour la liste des appareils 209. Ensuite, dans l'étape S409, il est mis fin à l'algorithme.

La Fig. 5 illustre schématiquement un algorithme mis en oeuvre par le dispositif de configuration 200, lors de la définition d'une règle de gestion.

L'algorithme démarre dans une étape S501, durant laquelle l'affichage de l'interface graphique 700 est initialisé. Un exemple d'une telle interface graphique est décrit ci-après en relation avec la Fig. 7.

Dans une étape suivante S502, le dispositif de configuration 200 détecte une sélection, par l'utilisateur via l'interface graphique 700, d'un appareil du système 100. Cette sélection peut s'effectuer à l'aide d'un pointeur ou d'un écran tactile. Préférentiellement, le dispositif de configuration 200 permet, via l'interface graphique 700, l'affichage de représentations des appareils par groupes établis selon leur répartition géographique et/ou selon les services qu'ils fournissent. Par exemple, l'interface graphique 700 permet, à partir d'une liste des appareils, d'indiquer dans quelle pièce d'une habitation chaque appareil est situé et/ou à quel service, *e.g.* multimédia ou domotique, chaque appareil est relatif. Le dispositif de configuration 200 conserve alors cette indication dans la liste des appareils 209.

Dans une étape suivante S503, le dispositif de configuration 200 détecte qu'un type d'élément de règle de gestion, *i.e.* condition ou action, est sélectionné pour l'appareil sélectionné à l'étape S502. Cette sélection peut s'effectuer par glisser-déposer (*drag-and-drop* en anglais) d'un icône représentatif de l'appareil sélectionné dans une première zone 710 de l'interface graphique 700, destinée à la définition des conditions de la règle de gestion, ou dans une seconde zone 720 de l'interface graphique 700, destinée à la définition des actions de la règle de gestion.

Dans une étape suivante S504, le dispositif de configuration 200 obtient une description sémantique des états dans lesquels l'appareil sélectionné a la possibilité de se trouver ou une description des fonctions qu'il a la possibilité d'exécuter. La description obtenue dépend du type d'élément de règle de gestion, *i.e.* condition ou action, sélectionné à l'étape S503. Le dispositif de configuration 200 permet alors, dans une étape suivante S505, une mise à jour de l'affichage en conséquence. Ainsi, l'utilisateur obtient une visualisation sous forme d'expressions sémantiques des conditions ou actions qu'il peut utiliser pour définir la règle de gestion sur la base de l'appareil sélectionné.

Dans une étape suivante S506, le dispositif de configuration 200 détecte une sélection d'un état ou d'une fonction parmi ceux affichés lors de l'étape S505. Une condition ou une action est ainsi définie. Cela signifie que l'utilisateur a respectivement sélectionné une condition ou une action pour définir la règle de gestion. Dans une étape S507 suivante, le dispositif de configuration 200 permet une mise à jour de l'affichage en conséquence. Une zone 730 de l'interface graphique 700, destinée à afficher la règle de gestion en cours de définition, fait alors apparaître sous forme sémantique la condition ou l'action.

Dans un mode de réalisation particulier, le dispositif de configuration 200 permet l'affichage d'une expression sémantique correspondant à un nom de l'appareil sélectionné associée à une expression sémantique correspondant à un verbe représentatif de l'état ou de l'action concerné. En reprenant l'exemple de la lampe déjà mentionné, l'affichage peut résulter en «la lampe est allumée » pour une condition ou « allumer la lampe » pour une action.

De manière préférentielle, le dispositif de configuration 200 permet l'insertion automatique, pour l'affichage de la règle de gestion en cours de définition, d'expressions sémantiques de liaison sur la base de la condition ou action. En reprenant l'exemple de la lampe déjà mentionné, l'affichage peut résulter en « si la lampe est allumée » pour une condition ou « alors allumer la lampe » pour une action. D'autres expressions sémantiques de liaison peuvent être insérées. Par exemple, le dispositif de configuration 200 peut permettre de définir plusieurs conditions pour une même règle de gestion. Ces conditions peuvent être des alternatives pour déclencher l'action et dans ce cas, elles sont séparées par l'expression sémantique « ou » ; elles peuvent au contraire être cumulatives et dans ce cas, elles sont séparées par l'expression sémantique « et ». De même, le dispositif de configuration 200 peut permettre de définir plusieurs actions pour une même règle de gestion. Dans ce cas, les différentes actions sont séparées par l'expression sémantique « et ».

Dans une étape suivante S508, le dispositif de configuration 200 vérifie si la définition de la règle est terminée. Si tel est le cas, une étape S509 est effectuée ; sinon, l'étape S502 est réitérée.

Dans l'étape S509, le dispositif de configuration 200 stocke la règle dans sa forme sémantique, par exemple dans la liste 209, et transcrit la règle de gestion en instructions interprétables par le moteur de règles 202. Dans une étape suivante S510, le dispositif de configuration 200 stocke la règle de gestion transcrite dans la base de règles 203. Ensuite, une nouvelle règle de gestion peut être définie en réitérant l'algorithme à compter de l'étape S501.

Dans un mode de réalisation particulier, le dispositif de configuration 200 permet, via l'interface graphique 700, une sélection de plusieurs appareils lors de l'étape S502. Il permet alors d'associer une condition ou action à l'ensemble des appareils de cette sélection. Alors, lors de l'étape 505, seulement les états ou fonctions communs à tous les appareils de la sélection sont affichés. Préférentiellement, à l'étape S507, lors de la mise à jour de l'affichage de la règle de gestion en cours de définition, une condition, ou une action selon le cas, est affichée pour chaque appareil de la sélection. Cela facilite la transcription ultérieure de la règle de gestion en instructions interprétables par le moteur de règles 202.

Dans un autre mode de réalisation particulier, le dispositif de configuration 200 permet à l'utilisateur, via l'interface graphique, de définir au moins une condition de règle de gestion sur la base d'un événement d'horodatage. Le système 100 dispose alors d'une horloge permettant au dispositif de configuration 200 de vérifier si la condition basée sur l'événement d'horodatage est remplie.

Par exemple, l'utilisateur peut définir une condition par rapport à une date, à un horaire donné à cette date, à un horaire donné quelle que soit la date, à un jour de la semaine, etc.

Selon une variante de réalisation, le dispositif de configuration 200 permet à l'utilisateur, via l'interface graphique, de définir au moins une condition de règle de gestion sur la base d'un événement d'activation d'un profil utilisateur auprès du système 100. La technologie de radio-identification RFID (pour *Radio Frequency Identification* en anglais ou *Identification par Fréquence Radio* en français) peut être utilisée à cet effet. Elle permet de stocker des données sur des radio-étiquettes ou étiquettes RFID (*RFID Tag* en anglais). Les standards ISO 14443 A & B peuvent par exemple être mis en oeuvre. Ainsi, un utilisateur peut activer son profil en plaçant l'étiquette RFID qui l'identifie à proximité d'un lecteur correspondant. De la même façon, un utilisateur disposant d'un terminal équipé de la technologie NFC (*Near Field Communication* en anglais ou *Communication en Champ Proche* en français), comme un téléphone portable, peut échanger des informations l'identifiant par rapport au système 200 équipé du lecteur correspondant, en utilisant son terminal NFC en mode point-à-point (*peer-to-peer* en anglais) ou émulation d'étiquette. D'autres techniques peuvent être utilisées pour détecter l'activation d'un profil utilisateur auprès du système 100. Par exemple, la technologie Bluetooth (marque déposée) telle que définie dans le standard IEEE 802.15.1 peut être utilisée pour détecter que le téléphone portable ou l'assistant numérique personnel PDA (*Personal Digital Assistant* en anglais) d'un utilisateur particulier est présent dans la zone de couverture du système 100.

Dans un exemple de mise en oeuvre, l'utilisateur peut alors définir une condition se rapportant à sa présence ou à son absence dans les locaux dans lesquels le système 100 est installé.

Les conditions définies sur la base d'événements d'horodatage ou d'activation d'un profil utilisateur peuvent être combinées entre elles et/ou combinées avec au moins une condition d'état d'un appareil du système 100 afin de définir la règle de gestion.

La Fig. 6 illustre schématiquement un algorithme mis en oeuvre par l'unité de contrôle 110 pour appliquer une règle de gestion telle que définie par exécution de l'algorithme de la Fig. 5.

L'algorithme démarre dans une étape S601. Dans une étape suivante S602, l'unité de contrôle 110 détecte un événement. Cet événement peut être relatif à un changement d'état d'un appareil du système 100, être un événement d'horodatage ou d'activation de profil utilisateur comme évoqué ci-dessus.

Dans une étape suivante S603, l'unité de contrôle 110 effectue une étape de vérification des règles de gestion qui ont été préalablement définies. Plus particulièrement, le moteur de règles 202 parcourt la base de règles 203. Dans une étape suivante S604, l'unité de contrôle 110 vérifie si l'événement détecté correspond à une condition d'une règle de gestion préalablement définie. Si tel est le cas, une étape S605 est effectuée ; sinon, il est mis fin à l'algorithme dans une étape S606.

Ce fonctionnement du système avec un moteur de règles en chaînage avant peut s'appliquer avec un moteur de règles en chaînage arrière, c'est-à-dire un moteur qui vérifie que, pour un but donné, les conditions sont établies.

Dans l'étape S605, l'unité de contrôle 110 effectue l'action définie dans la règle de gestion pour laquelle la condition, ou l'ensemble des conditions, sont remplies. Plus particulièrement, le moteur de règles 202 instruit le module de gestion 208 d'invoquer chaque fonction correspondant à l'action, ou aux actions, définies dans la règle de gestion. Il est ensuite mis fin à l'algorithme au cours de l'étape S606.

La Fig. 7 illustre schématiquement un exemple d'interface graphique 700 qui permet à l'utilisateur de définir une règle de gestion.

L'interface graphique 700 comporte des zones déjà mentionnées : la zone 710 qui est destinée à la définition des conditions de la règle de gestion ; la zone 720 qui est destinée à la définition des actions de la règle de gestion ; et la zone 730 qui est destinée à l'affichage de la règle de gestion en cours de définition.

L'interface graphique 700 comporte en outre une zone 740 qui est destinée à l'affichage d'icônes 742, 746, 747, 748 représentatifs des appareils du système 100 qui peuvent faire l'objet d'une condition ou d'une action. La zone 740 peut comporter plusieurs sous-zones 741, 745 afin d'afficher les icônes 742, 746, 747, 748 selon une répartition géographique des appareils dans le système 100 et/ou selon des services fournis par ces appareils.

La zone 710 comporte une sous-zone 714 pour déposer un icône 742, 746, 747, 748 représentatif d'un appareil du système 100. Lorsque l'utilisateur effectue un cliquer-déposer de l'icône 742, 746, 747, 748 dans la zone 714, une autre sous-zone 715 de la zone 710 est mise à jour avec une description sémantique de chaque état dans lequel l'appareil concerné peut se trouver. Cette sous-zone 715 permet à l'utilisateur de faire son choix parmi ces états pour ajouter une ou plusieurs conditions à la règle de gestion en cours de définition.

La zone 710 comporte en outre au moins un bouton de validation de condition (non représenté) qui permet de sélectionner une condition pour définir la règle de gestion. Dans un mode préférentiel de réalisation, la zone 710 comporte deux boutons de validation : un premier bouton pour ajouter une condition alternative à une autre condition de la règle de gestion en cours de définition, et un second bouton pour ajouter une condition cumulative à une autre condition de la règle de gestion en cours de définition.

La zone 720 comporte une sous-zone 724 pour déposer un icône 742, 746, 747, 748 représentatif d'un appareil du système 100. Lorsque l'utilisateur effectue un cliquer-déposer de l'icône 742, 746, 747, 748 dans la zone 724, une autre sous-zone 725 de la zone 720 est mise à jour avec une description sémantique des fonctions offertes par l'appareil concerné. Cette sous-zone 725 permet à l'utilisateur de faire son choix parmi ces fonctions pour ajouter une ou plusieurs actions à la règle de gestion en cours de définition.

La zone 720 comporte en outre un bouton de validation d'action (non représenté) qui permet de sélectionner une action pour définir la règle de gestion. Si une action est déjà présente dans la règle de gestion en cours de définition, l'action validée est ajoutée de manière cumulative à celle déjà présente.

L'interface graphique 700 peut en outre comporter des onglets 711, 712, 713 qui sont activés de manière exclusive. L'onglet 711 est destiné à activer la zone 710 pour définir une condition relative à un état d'un appareil, ou d'une sélection de plusieurs appareils, du système 100. L'onglet 712 est destiné à activer la zone 710 pour définir une condition relative à un événement d'horodatage. L'onglet 713 est destiné à activer la zone 710 pour définir une condition relative à une activation de profil utilisateur.

L'interface graphique 700 peut en outre permettre de sélectionner plusieurs appareils dans la zone 740, et de faire un glisser-déposer simultané des icônes représentant ces appareils dans l'une des sous-zones 714 et 724. Dans ce cas, les sous-zones 715 et 725 sont respectivement mises à jour par le dispositif de configuration 200 avec les expressions sémantiques des états et des fonctions qui sont communs aux appareils sélectionnés.

L'interface graphique 700 peut en outre comporter un menu de sélection de langue. Ainsi, l'utilisateur peut choisir une langue parmi un ensemble proposé par le dispositif de configuration 200 via l'interface graphique 700. Le dispositif de configuration 200 transcrit alors les descriptions des états et fonctions en expressions sémantiques dans la langue sélectionnée. De plus, lorsqu'il insère automatiquement des expressions sémantiques de liaison, le dispositif de configuration 200 le fait dans la langue sélectionnée.

L'interface graphique 700 comporte en outre un bouton de validation de règle de gestion (non représenté), qui permet de valider la règle de gestion affichée dans la zone 730. La règle de gestion est alors stockée dans sa forme sémantique, par exemple dans la liste 209, et transcrite en instructions interprétables par le moteur de règles 202, comme précédemment décrit en relation avec la Fig. 5.

L'interface utilisateur peut également être multimodale, et utiliser une combinaison d'entrées et sorties graphiques et vocales. Le système peut s'appuyer sur les termes sémantiques couvrant les équipements, leurs fonctions et états, pour définir un dictionnaire de mots qui sont préférentiellement reconnus par un moteur de reconnaissance vocale. Ainsi, un utilisateur peut parler pour dicter une règle au système, lequel s'appuie alors sur le dictionnaire sémantique pour établir une reconnaissance vocale multi-utilisateur. En retour, à l'énoncé d'une règle, le système peut afficher via l'élément d'interface graphique 730 la règle sémantique reconnue par le système.

L'interface utilisateur peut également être uniquement vocale. La définition de la règle de gestion se fait alors par reconnaissance vocale et la diffusion des informations relatives aux appareils du système 100, des expressions sémantiques correspondant aux états et fonctions et de la règle de gestion en cours de définition se fait par synthèse vocale plutôt que par affichage.

## Revendications

1. Procédé de configuration pour la gestion d'appareils (121;122;131;132;133) d'un système (100) sur la base de règles de gestion définissant au moins une action à exécuter par ledit système lorsqu'au moins une condition est remplie, ledit système comportant un moteur de règles (202) destiné à mettre en oeuvre lesdites règles de gestion, le procédé étant tel qu'un dispositif de configuration (200) :
- fournit (S505) des expressions sémantiques d'états et de fonctions à une interface utilisateur (700) ;
- permet (S506) à un utilisateur, via l'interface utilisateur, de définir au moins une règle de gestion à partir d'au moins une condition, sur la base des expressions sémantiques d'états, et d'au moins une action, sur la base des expressions sémantiques de fonctions ;
- transcrit (S509) chaque règle de gestion, définie sémantiquement via l'interface utilisateur, en instructions interprétables par le moteur de règles, **caractérisé en ce que** le dispositif de configuration :
- obtient (S405) une description d'états dans lesquels chaque appareil du système a la possibilité de se trouver ;
- obtient (S405) une description de fonctions que chaque appareil du système a la possibilité d'exécuter ;
- transcrit (S407) lesdites descriptions des états et fonctions en expressions sémantiques respectives pour fournir lesdites expressions sémantiques d'états et de fonctions à l'interface utilisateur.

2. Procédé de configuration selon la revendication 1, **caractérisé en ce que**, lorsqu'un état ou une fonction est associé à au moins un attribut pouvant prendre différentes valeurs, le dispositif de configuration transcrit la description de l'état ou de la fonction en expressions sémantiques en fonction desdites différentes valeurs.

3. Procédé de configuration selon l'une des revendications 1 ou 2, **caractérisé en ce que** le dispositif de configuration transcrit lesdites descriptions des états et fonctions en expressions sémantiques dans une langue prédéterminée parmi un choix de plusieurs langues disponibles via l'interface utilisateur.

4. Procédé de configuration selon l'une quelconque des revendications 1 à 3, **caractérisé en ce que** le dispositif de configuration transcrit lesdites descriptions des états et fonctions en expressions sémantiques par utilisation d'au moins un dictionnaire de correspondance (206) entre, pour chaque appareil en fonction de son type, chaque état ou fonction et une expression sémantique correspondante.

5. Procédé de configuration selon l'une quelconque des revendications 1 à 4, **caractérisé en ce que** le dispositif de configuration permet à l'utilisateur, via l'interface utilisateur, de définir au moins une condition de règle de gestion sur la base d'un événement d'horodatage ou d'activation d'un profil utilisateur auprès dudit système.

6. Procédé de configuration selon l'une quelconque des revendications 1 à 5, **caractérisé en ce que** le dispositif de configuration permet la diffusion via l'interface utilisateur d'une règle de gestion en cours de définition, et **en ce que** le dispositif de configuration permet la diffusion via l'interface utilisateur, pour chaque appareil concerné par une condition ou action définie, d'une expression sémantique correspondant à un nom dudit appareil associée à une expression sémantique correspondant à un verbe représentatif de l'état ou de la fonction concerné par respectivement ladite condition ou action définie.

7. Procédé de configuration selon la revendication 6, **caractérisé en ce que** le dispositif de configuration permet l'insertion automatique, pour l'affichage de la règle de gestion en cours de définition, d'expressions sémantiques de liaison sur la base de chaque condition ou action définie.

8. Procédé de configuration selon la revendication 6 ou 7, **caractérisé en ce que** le dispositif de configuration permet, via l'interface utilisateur, une sélection de plusieurs appareils, et **en ce qu'**il permet d'associer une condition ou action à cette sélection d'appareils.

9. Procédé de configuration selon l'une des revendications 1 à 8, **caractérisé en ce que**, l'interface utilisateur étant une interface graphique, le dispositif de configuration permet, via l'interface graphique, l'affichage de représentations desdits appareils par groupes établis selon une répartition géographique desdits appareils et/ou selon des services fournis par lesdits appareils.

10. Procédé de configuration selon l'une des revendications 1 à 9, **caractérisé en ce que** le dispositif de configuration reçoit des descriptifs d'états et de fonctions des appareils selon différents protocoles utilisant différents formats, et **en ce qu'**il transcrit (S406) dans un même format les descriptifs reçus pour obtenir lesdites descriptions des états et fonctions.

11. Dispositif (200) de configuration pour la gestion d'appareils (121;122;131;132;133) d'un système (100) sur la base de règles de gestion définissant au moins une action à exécuter par ledit système lorsqu'au moins une condition est remplie, ledit système comportant un moteur de règles (202) destiné à mettre en oeuvre lesdites règles de gestion, le dispositif de configuration comportant:
- des moyens (201,205) pour fournir des expressions sémantiques d'états et de fonctions à une interface utilisateur;
- des moyens (201,205) pour permettre à un utilisateur, via l'interface utilisateur, de définir au moins une règle de gestion à partir d'au moins une condition, sur la base des expressions sémantiques d'états, et d'au moins une action, sur la base des expressions sémantiques de fonctions ;
- des moyens (204) pour transcrire chaque règle de gestion, définie sémantiquement via l'interface utilisateur, en instructions interprétables par le moteur de règles ;
**caractérisé en ce qu'**il comporte en outre :
- des moyens (208,209,210) pour obtenir une description d'états dans lesquels chaque appareil du système a la possibilité de se trouver ;
- des moyens (208,209,210) pour obtenir une description de fonctions que chaque appareil du système a la possibilité d'exécuter ;
- des moyens (205,206) pour transcrire lesdites descriptions des états et fonctions en expressions sémantiques respectives pour fournir lesdites expressions sémantiques d'états et de fonctions à l'interface utilisateur.

12. Dispositif selon la revendication 11, **caractérisé en ce qu'**il comporte :
- un groupement d'interfaces (305) ;
- un module de mise en forme (210) transcrivant dans un même format les descriptions d'états et les descriptions de fonctions, lorsque lesdits descriptifs sont reçus selon différents protocoles via ledit groupement d'interfaces ;
- un module de gestion (208) d'une liste (209) desdits appareils ;
- un module gestionnaire (207) d'états effectifs desdits appareils destiné à fournir au moteur de règles des informations quant à la survenue d'événements qui entraînent des changements d'état desdits appareils ;
- un accès à une base de données sémantiques (206) fournissant une correspondance entre, pour chaque appareil en fonction de son type, chaque état ou fonction et une expression sémantique correspondante ;
- un éditeur de règles (205) adapté pour transcrire lesdites descriptions des états et fonctions en expressions sémantiques respectives, à l'aide de ladite base de données sémantiques.

13. Programme d'ordinateur, **caractérisé en ce qu'**il comprend des instructions pour mettre en oeuvre, par un dispositif de configuration, le procédé selon l'une quelconque des revendications 1 à 10, lorsque ledit programme est exécuté par un processeur dudit dispositif de configuration.

14. Moyens de stockage, **caractérisés en ce qu'**ils stockent un programme d'ordinateur comprenant des instructions pour mettre en oeuvre, par un dispositif de configuration, le procédé selon l'une quelconque des revendications 1 à 10, lorsque ledit programme est exécuté par un processeur dudit dispositif de configuration.

15. Interface graphique (700) de définition de règles de gestion pour la gestion d'appareils (121;122;131;132;133) d'un système (100), chaque règle de gestion définissant au moins une action à exécuter par ledit système lorsqu'au moins une condition est remplie, **caractérisée en ce qu'**elle comporte :
- une première zone d'affichage (740) destinée à afficher des représentations desdits appareils et à permettre à un utilisateur de sélectionner au moins un desdits appareils ;
- une seconde zone d'affichage (710) destinée à afficher des expressions sémantiques représentatives d'états respectifs dans lesquels au moins un appareil sélectionné a la possibilité de se trouver et à permettre à un utilisateur de sélectionner ;
- une troisième zone d'affichage (720) destinée à afficher des expressions sémantiques représentatives de fonctions qu'au moins un appareil sélectionné a la possibilité d'exécuter ;
- une quatrième zone d'affichage (730) destinée à afficher une règle de gestion en cours de définition ;
et **en ce que** lesdites seconde et troisième zones d'affichage sont adaptées pour permettre à un utilisateur de définir au moins une règle de gestion à partir d'au moins une condition, sur la base des expressions sémantiques d'états affichées dans la seconde zone d'affichage, et d'au moins une action, sur la base des expressions sémantiques de fonctions affichées dans la troisième zone d'affichage.

## Patentansprüche

1. Konfigurationsverfahren für das Management von Geräten (121; 122; 131; 132; 133) eines Systems (100) auf der Basis von Managementregeln, die mindestens eine vom System auszuführende Aktion definieren, wenn mindestens eine Bedingung erfüllt ist, wobei das System eine Regelmaschine (202) aufweist, die dazu bestimmt ist, die Managementregeln anzuwenden, wobei das Verfahren derart ist, dass eine Konfigurationsvorrichtung (200) :
- semantische Ausdrücke von Zuständen und Funktionen an eine Benutzerschnittstelle (700) liefert (S505);
- einem Benutzer über die Benutzerschnittstelle erlaubt (S506), mindestens eine Managementregel ausgehend von mindestens einer Bedingung auf der Basis der semantischen Ausdrücke von Zuständen und von mindestens einer Aktion auf der Basis der semantischen Ausdrücke von Funktionen zu definieren;
- jede Managementregel, die semantisch über die Benutzerschnittstelle definiert wird, in von der Regelmaschine interpretierbare Anweisungen transkribiert (S509),
**dadurch gekennzeichnet, dass** die Konfigurationsvorrichtung:
- eine Beschreibung von Zuständen (S405) erhält, in denen jedes Gerät des Systems die Möglichkeit hat, sich zu befinden;
- eine Beschreibung von Funktionen erhält (S405), die jedes Gerät des Systems die Möglichkeit hat, auszuführen;
- die Beschreibungen der Zustände und Funktionen in jeweilige semantische Ausdrücke transkribiert (S407), um die semantischen Ausdrücke von Zuständen und Funktionen an die Benutzerschnittstelle zu liefern.

2. Konfigurationsverfahren nach Anspruch 1, **dadurch gekennzeichnet, dass**, wenn ein Zustand oder eine Funktion mindestens einem Attribut zugeordnet ist, das verschiedene Werte annehmen kann, die Konfigurationsvorrichtung die Beschreibung des Zustands oder der Funktion abhängig von den verschiedenen Werten in semantische Ausdrücke transkribiert.

3. Konfigurationsverfahren nach einem der Ansprüche 1 oder 2, **dadurch gekennzeichnet, dass** die Konfigurationsvorrichtung die Beschreibungen der Zustände und Funktionen in semantische Ausdrücke in einer vorbestimmten Sprache unter einer Auswahl mehrerer verfügbarer Sprachen über die Benutzerschnittstelle transkribiert.

4. Konfigurationsverfahren nach einem der Ansprüche 1 bis 3, **dadurch gekennzeichnet, dass** die Konfigurationsvorrichtung die Beschreibungen der Zustände und Funktionen durch Verwendung mindestens eines Entsprechungswörterbuchs (206) zwischen, für jedes Gerät abhängig von seinem Typ, jedem Zustand oder jeder Funktion und einem entsprechenden semantischen Ausdruck in semantische Ausdrücke transkribiert.

5. Konfigurationsverfahren nach einem der Ansprüche 1 bis 4, **dadurch gekennzeichnet, dass** die Konfigurationsvorrichtung es dem Benutzer über die Benutzerschnittstelle erlaubt, mindestens eine Managementregelbedingung auf der Basis eines Ereignisses der Zeitstempelung oder der Aktivierung eines Benutzerprofils bei dem System zu definieren.

6. Konfigurationsverfahren nach einem der Ansprüche 1 bis 5, **dadurch gekennzeichnet, dass** die Konfigurationsvorrichtung die Verbreitung einer Managementregel während ihrer Definition über die Benutzerschnittstelle erlaubt, und dass die Konfigurationsvorrichtung die Verbreitung über die Benutzerschnittstelle, für jedes durch eine definierte Bedingung oder Aktion betroffene Gerät, eines semantischen Ausdrucks entsprechend einem Namen des Geräts erlaubt, der einem semantischen Ausdruck zugeordnet ist, der einem Verb entspricht, das für den Zustand oder die Funktion repräsentativ ist, der/die von der definierten Bedingung oder Aktion betroffen ist.

7. Konfigurationsverfahren nach Anspruch 6, **dadurch gekennzeichnet, dass** die Konfigurationsvorrichtung die automatische Einfügung, zur Anzeige der Managementregel während ihrer Definition, von semantischen Verbindungsausdrücken auf der Basis jeder definierten Bedingung oder Aktion erlaubt.

8. Konfigurationsverfahren nach Anspruch 6 oder 7, **dadurch gekennzeichnet, dass** die Konfigurationsvorrichtung über die Benutzerschnittstelle eine Auswahl mehrerer Geräte erlaubt, und dass sie es erlaubt, dieser Geräteauswahl eine Bedingung oder Aktion zuzuordnen.

9. Konfigurationsverfahren nach einem der Ansprüche 1 bis 8, **dadurch gekennzeichnet, dass**, da die Benutzerschnittstelle eine grafische Schnittstelle ist, die Konfigurationsvorrichtung über die grafische Schnittstelle die Anzeige von Darstellungen der Geräte in Gruppen erlaubt, die gemäß einer geographischen Verteilung der Geräte und/oder gemäß von den Geräten gelieferten Diensten erstellt werden.

10. Konfigurationsverfahren nach einem der Ansprüche 1 bis 9, **dadurch gekennzeichnet, dass** die Konfigurationsvorrichtung Deskriptive von Zuständen und von Funktionen der Geräte gemäß verschiedenen Protokollen erlaubt, die verschiedene Formate verwenden, und dass sie die empfangenen Deskriptive in ein gleiches Format transkribiert (S406), um die Beschreibungen der Zustände und Funktionen zu erhalten.

11. Konfigurationsvorrichtung (200) für das Management von Geräten (121; 122; 131; 132; 133) eines Systems (100) auf der Basis von Managementregeln, die mindestens eine durch das System auszuführende Aktion definieren, wenn mindestens eine Bedingung erfüllt ist, wobei das System eine Regelmaschine (202) aufweist, die dazu bestimmt ist, die Managementregeln anzuwenden, wobei die Konfigurationsvorrichtung aufweist:
- Einrichtungen (201, 205), um semantische Ausdrücke von Zuständen und Funktionen an eine Benutzerschnittstelle zu liefern;
- Einrichtungen (201, 205), um es einem Benutzer über die Benutzerschnittstelle zu ermöglichen, mindestens eine Managementregel ausgehend von mindestens einer Bedingung, auf der Basis der semantischen Ausdrücke von Zuständen, und mindestens einer Aktion, auf der Basis der semantischen Ausdrücke von Funktionen zu definieren;
- Einrichtungen (204), um jede semantisch über die Benutzerschnittstelle definierte Managementregel in von der Regelmaschine interpretierbare Anweisungen umzusetzen;
**dadurch gekennzeichnet, dass** sie außerdem aufweist:
- Einrichtungen (208, 209, 210), um eine Beschreibung von Zuständen zu erhalten, in denen jedes Gerät des Systems die Möglichkeit hat, sich zu befinden;
- Einrichtungen (208, 209, 210), um eine Beschreibung von Funktionen zu erhalten, die jedes Gerät des Systems die Möglichkeit hat, auszuführen;
- Einrichtungen (205, 206), um die Beschreibungen der Zustände und Funktionen in jeweilige semantische Ausdrücke zu transkribieren, um die semantischen Ausdrücke von Zuständen und von Funktionen an die Benutzerschnittstelle zu liefern.

12. Vorrichtung nach Anspruch 11, **dadurch gekennzeichnet, dass** sie aufweist:
- eine Gruppe von Schnittstellen (305);
- ein Formatierungsmodul (210), das die Beschreibungen von Zuständen und die Beschreibungen von Funktionen in das gleiche Format transkribiert, wenn die Deskriptive gemäß verschiedenen Protokollen über die Gruppe von Schnittstellen empfangen werden;
- ein Managementmodul (208) einer Liste (209) der Geräte;
- ein Managermodul (207) von effektiven Zuständen der Geräte, das dazu bestimmt ist, an die Regelmaschine Informationen bezüglich des Auftretens von Ereignissen zu liefern, die Zustandsänderungen der Geräte nach sich ziehen;
- einen Zugang zu einer semantischen Datenbank (206), die eine Entsprechung zwischen, für jedes Gerät abhängig von seinem Typ, jedem Zustand oder jeder Funktion und einem entsprechenden semantischen Ausdruck liefert;
- einen Regeleditor (205), der geeignet ist, die Beschreibungen der Zustände und Funktionen mit Hilfe der semantischen Datenbank in jeweilige semantische Ausdrücke zu transkribieren.

13. Computerprogramm, **dadurch gekennzeichnet, dass** es Anweisungen enthält, um durch eine Konfigurationsvorrichtung das Verfahren nach einem der Ansprüche 1 bis 10 anzuwenden, wenn das Programm von einem Prozessor der Konfigurationsvorrichtung ausgeführt wird.

14. Speichereinrichtungen, **dadurch gekennzeichnet, dass** sie ein Computerprogramm speichern, das Anweisungen zur Anwendung durch eine Konfigurationsvorrichtung des Verfahrens nach einem der Ansprüche 1 bis 10 enthält, wenn das Programm von einem Prozessor der Konfigurationsvorrichtung ausgeführt wird.

15. Grafische Schnittstelle (700) zur Definition von Managementregeln für das Management von Geräten (121; 122; 131; 132; 133) eines Systems (100), wobei jede Managementregel mindestens eine vom System auszuführende Aktion definiert, wenn mindestens eine Bedingung erfüllt ist, **dadurch gekennzeichnet, dass** sie aufweist:
- eine erste Anzeigezone (740), die dazu bestimmt ist, Darstellungen der Geräte anzuzeigen und es einem Benutzer zu erlauben, mindestens eines der Geräte auszuwählen;
- eine zweite Anzeigezone (710), die dazu bestimmt ist, semantische Ausdrücke anzuzeigen, die für jeweilige Zustände repräsentativ sind, in denen mindestens ein ausgewähltes Gerät die Möglichkeit hat, sich zu befinden, und es einem Benutzer zu erlauben, auszuwählen;
- eine dritte Anzeigezone (720), die dazu bestimmt ist, semantische Ausdrücke anzuzeigen, die für Funktionen repräsentativ sind, die mindestens ein ausgewähltes Gerät die Möglichkeit hat, auszuführen;
- eine vierte Anzeigezone (730), die dazu bestimmt ist, eine Managementregel während ihrer Definition anzuzeigen;
und dass die zweite und dritte Anzeigezone geeignet sind, einem Benutzer zu erlauben, mindestens eine Managementregel ausgehend von mindestens einer Bedingung, auf der Basis der semantischen Ausdrücke von Zuständen, die in der zweiten Anzeigezone angezeigt werden, und mindestens einer Aktion, auf der Basis der semantischen Ausdrücke von Funktionen zu definieren, die in der dritten Anzeigezone angezeigt werden.

## Claims

1. Configuring method for managing appliances (121;122;131;132;133) in a system (100) on the basis of management rules defining at least one action to be executed by said system when at least one condition is fulfilled, said system comprising a rules engine (202) intended to implement said management rules, the method being such that a configuring device (200):
- supplies (S505) semantic expressions of states and functions to a user interface (700);
- enables (S506) a user, via the user interface, to define at least one management rule from at least one condition, on the basis of the semantic expressions of states, and at least one action, on the basis of the semantic expressions of functions;
- transcribes (S509) each management rule, defined semantically via the user interface, into instructions interpretable by the rules engine;
**characterised in that** the configuring device:
- obtains (S405) a description of states in which each appliance in the system is able to be;
- obtains (S405) a description of functions that each appliance in the system is able to execute;
- transcribes (S407) said descriptions of states and functions into respective semantic expressions for supplying said semantic expressions of states and functions to the user interface.

2. Configuring method according to claim 1, **characterised in that**, when a state or function is associated with at least one attribute that may take various values, the configuring device transcribes the description of the state or function into semantic expressions in function of said various values.

3. Configuring method according to any one of claims 1 or 2, **characterised in that** the configuring device transcribes said descriptions of the states and functions into semantic expressions in a predetermined language from a choice of several languages available via the user interface.

4. Configuring method according to any one of claims 1 to 3, **characterised in that** the configuring device transcribes said descriptions of the states and functions into semantic expressions by the use of at least one dictionary (206) for matching, for each appliance according to its type, between each state or function and a corresponding semantic expression.

5. Configuring method according to any one of claims 1 to 4, **characterised in that** the configuring device enables the user, via the user interface, to define at least one management rule condition on the basis of a time-stamping event or of an event of activation of a user profile with said system.

6. Configuring method according to any one of claims 1 to 5, **characterised in that** the configuring device enables broadcasting via the user interface of a management rule currently being defined, and **in that** the configuring device enables broadcasting via the user interface, for each appliance to which a defined condition or action relates, of a semantic expression corresponding to a name of said appliance associated with a semantic expression corresponding to a verb representative of the state or function to which said defined condition or action respectively relates.

7. Configuring method according to claim 6, **characterised in that** the configuring device allows the automatic insertion, for display of the management rule currently being defined, of linking semantic expressions on the basis of each defined condition or action.

8. Configuring method according to claim 6 or 7, **characterised in that** the configuring device enables, via the user interface, a selection of several appliances, and **in that** it enables associating a condition or action with this selection of appliances.

9. Configuring method according to any one of claims 1 to 8, **characterised in that**, the user interface being a graphical interface, the configuring device allows, via the graphical interface, the display of representations of said appliances by groups established according to a geographical distribution of said appliances and/or according to services provided by said appliances.

10. Configuring method according to any one of claims 1 to 9, **characterised in that** the configuring device receives descriptions of states and functions of the appliances according to various protocols using various formats, and **in that** it transcribes (S406) in a same format the received descriptions in order to obtain said descriptions of states and functions.

11. Configuring device (200) for managing appliances (121;122;131;132;133) in a system (100) on the basis of management rules defining at least one action to be executed by said system when at least one condition is fulfilled, said system comprising a rules engine (202) intended to implement said management rules, the configuring device comprising:
- means (201, 205) for supplying semantic expressions of states and functions to a user interface;
- means (201, 205) for enabling a user, via the user interface, to define at least one management rule from at least one condition, on the basis of the semantic expressions of states, and at least one action, on the basis of the semantic expressions of functions;
- means (204) for transcribing each management rule, defined semantically via the user interface, as instructions interpretable by the rules engine;
**characterised in that** it also comprises:
- means (208, 209, 210) for obtaining a description of states in which each appliance in the system is able to be;
- means (208, 209, 210) for obtaining a description of functions that each appliance in the system is able to execute;
- means (205, 206) for transcribing said descriptions of states and functions as respective semantic expressions for supplying said semantic expressions of states and functions to the user interface.

12. Device according to claim 11, **characterised in that** it comprises:
- a group of interfaces (305);
- a shaping module (210) transcribing in a same format the descriptions of states and the descriptions of functions, when said descriptions are received according to various protocols via said group of interfaces;
- a module (208) for managing a list (209) of said appliances;
- a module (207) managing actual states of said appliances intended to supply to the rules engine information as to the occurrence of events implying changes in state of said appliances;
- an access to a semantic database (206) providing a match between, for each appliance according to its type, each state or function and a corresponding semantic expression;
- a rules editor (205) adapted to transcribe said descriptions of the states and functions as respective semantic expressions, by means of said semantic database.

13. Computer program, **characterised in that** it comprises instructions for implementing, by means of a configuring device, the method according to any one of claims 1 to 10, when said program is executed by a processor of said configuring device.

14. Storage means, **characterised in that** they store a computer program comprising instructions for implementing, by means of a configuring device, the method according to any one of claims 1 to 10, when said program is executed by a processor of said configuring device.

15. Graphical interface (700) for defining management rules for managing appliances (121;122;131;132;133) in a system (100), each management rule defining at least one action to be executed by said system when at least one condition is fulfilled, **characterised in that** it comprises:
- a first display zone (740) intended to display representations of said appliances and to enable a user to select at least one of said appliances;
- a second display zone (710) intended to display semantic expressions representing respective states in which at least one selected appliance is able to be and to enable a user to make a selection;
- a third display zone (720) intended to display semantic expressions representing functions that at least one selected appliance is able to execute;
- a fourth display zone (730) intended to display a management rule currently being defined;
and **in that** said second and third display zones are adapted to enable a user to define at least one management rule from at least one condition, on the basis of the semantic expressions of states displayed in the second display zone, and at least one action, on the basis of the semantic expressions of functions displayed in the third display zone.
